# EUROPEAN PATENT APPLICATION

(11) **EP 0 956 910 A1**
(43) Date of publication of application: **17.11.1999**
(21) Application number: 99302892.7
(22) Date of filing: 14.04.1999
(51) Int. Cl.: B09B 3/00

(54) **An installation for recovering gases which damage the environment**

(30) Priority: 15.04.1998 GB 9808028
(71) Applicant: Taylor, Gary, Conwy Morfa, Conwy, North Wales LL32 8ET (GB)
(72) Inventor: Taylor, Gary, Conwy Morfa, Conwy, North Wales LL32 8ET (GB)
(74) Representative: Jones, Graham H.

(57) **Abstract**

An installation (2) for recovering gases which damage the environment when released into the environment from products at the end of their working life, which installation (2) comprises an enclosure (4) which is sealable and which is for receiving the products, a shredder which is in the enclosure and which is for shredding the products to make a larger surface area and to break up component materials of the products for recycling, a crushing machine (6) which is in the enclosure (4) and which is for crushing the products, access means (8) in the enclosure (4) for permitting the products to be introduced into the enclosure (4) and to be removed from the enclosure (4), reclaim means (10) for reclaiming the gases which are released from the products into the enclosure (4), and control means (12) for controlling operation of the installation (2).

## Description

This invention relates to an installation for recovering gases which damage the environment. More especially, this invention relates to an installation for recovering gases which damage the environment when released into the environment from products at the end of their working life.

There are many products which contain gases which damage the environment. When these products are at the end of their working life, they are disposed of and the gases which they contain are released into the environment. Examples of such products are refrigerators, freezers, aerosol cans, and high expansion foam. The gases which damage the environment are usually chlorofluorocarbons which are known as CFC gases, and hydrochlorofluorocarbons which are known as HCFC gases. The products which are at the end of their working life may however contain other types of gases which damage the environment.

By way of example, it is mentioned that a domestic refrigerator comprises two main parts, these being the refrigeration plant, and the refrigeration body. Working on 100% CFC/HCFC gases, the refrigeration plant has approximately 20% of these gases, and the refrigeration body has approximately 80% of these gases. It takes approximately 100g of refrigerant to charge the refrigeration plant. Present attempts to reclaim the CFC/HCFC gases, are such that only about 80% of the CFC/HCFC gases in the refrigeration plant are recovered. The remaining 20% of the gases in the refrigeration plant are not able to be recovered since it is in the refrigerant oil. In the refrigeration body, there is approximately 1Kg of insulation if the refrigerator is a domestic refrigerator. There is approximately 100g minimum of refrigerant gases known as R11 and R12 for every 1Kg of the insulation. Both of these gases are known to cause serious depletion of the Earth's ozone layer. Generally approximately 55% of the CFC/HCFC gases are not recovered and they are left for being dispersed into the environment when the fridge is disposed of, usually by being crushed and then used as filling material in a land-fill site. Refrigerators which are no longer required are being exported to developing countries. Obviously, these refrigerators will eventually cease working and then they will need to be disposed of in the developing countries, resulting in the CFC/HCFC gases being disposed of into the environment in the developing countries.

It is an aim of the present invention to reduce the above mentioned problems.

Accordingly, in one non-limiting embodiment of the present invention there is provided an installation for recovering gases which damage the environment when released into the environment from products at the end of their working life, which installation comprises an enclosure which is sealable and which is for receiving the products, a shredder which is in the enclosure and which is for shredding the products to make a larger surface area and to break up component materials of the products for recycling, a crushing machine which is in the enclosure and which is for crushing the products, access means in the enclosure for permitting the products to be introduced into the enclosure and to be removed from the enclosure, reclaim means for reclaiming the gases which are released from the products into the enclosure, and control means for controlling operation of the installation.

The installation of the present invention is able to operate with a high percentage recovery of the gases. For example, in the case of the above mentioned refrigerators, the installation of the present invention may be able to recover at least 55% of the gases. The component materials of the products may be metals, plastics and insulation. The breaking up of these component materials may make it easier to retrieve each different type of component material during the recycling. The products will normally be shredded before they are crushed but they may be shredded after crushing if desired.

Preferably, the installation includes filter means for filtering the gases that are reclaimed so that the reclaimed gases are available for re-use in a non-contaminated condition. If the re-claimed gases are badly contaminated, then they may not be able to be re-used, in which case they will have to be disposed of in a controlled manner, which will be more expensive than enabling the gases to be re-used.

Preferably, the reclaim means comprises a vacuum pump for pumping the gases from the enclosure into containers. The containers are preferably cylinders but other types of containers may be employed.

The control means may include vacuum gauges, pressure gauges and gas leak detectors. The control means may also include first alarm means for indicating a gas leak from the enclosure, second alarm means for indicating if a person is trapped in the enclosure, and third alarm means for indicating the absence of a required vacuum in the enclosure. The control means may further include fourth alarm means for indicating if there is a fault on the crushing machine.

The installation may include safety devices as appropriate.

The control means may be provided in a control room which is adjacent the enclosure. The control room and the enclosure are preferably such that an operator in the control room is able to see into the enclosure. The control room may or may not be required.

The installation may be mobile to suit any application. The installation may be in any suitable and appropriate shape, size and form.

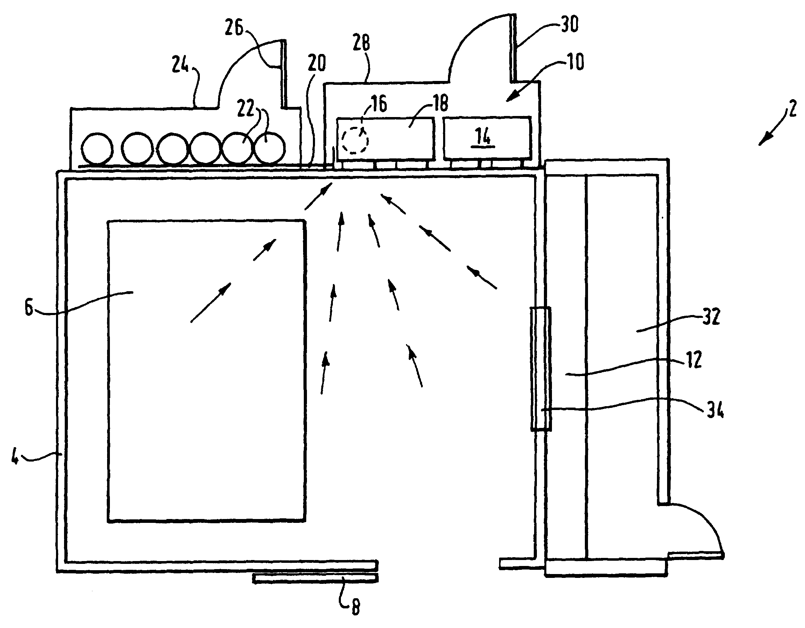

An embodiment of the invention will now be described solely by way of example and with reference to the accompanying drawing which is a schematic plan view of an installation for recovering gases which damage the environment.

Referring to the drawing, there is shown an installation 2 for recovering gases which damage the environment when released into the environment from products at the end of their working life. The installation 2 comprises an enclosure 4 which is sealable and which is for receiving the products. A crushing machine 6 is provided in the enclosure 4 as shown. The crushing machine 6 is for crushing the products (not shown) in the enclosure 4. The products can be any suitable and appropriate products containing gases which damage the environment. Thus, for example, the products in the enclosure 4 may be refrigerators, freezers, aerosol cans, and high expansion foam.

The installation 2 further comprises access means in the form of a sliding door 8. The sliding door 8 permits the products to be crushed to be introduced into the enclosure 4. The sliding door 8 also permits the crushed products to be removed from the enclosure 4.

The installation 2 has reclaim means 10 for reclaiming the gases which are released from the crushed products into the enclosure. The installation 2 also has control means 12 for controlling operation of the installation 2.

The installation 2 is provided with filter means (not shown) for filtering the gases that are reclaimed so that the reclaimed gases are available for re-use in a non-contaminated condition. The use of the filter means avoids the recovered gases from becoming contaminated with air or other gases and then being unable to be re-used.

The reclaim means 10 includes a vacuum pump 14 for pumping the gases from the enclosure through an outlet port 16 in a part 18 of the reclaim means 10. The reclaimed gases then pass from the part 18 along a conduit 20 to containers in the form of cylinders 22. The cylinders 22 are provided in a cage 24 having a door 26. The vacuum pump 14 and the reclaim part 18 are provided in a cage 28 having a door 30.

The control means 12 includes vacuum gauges, pressure gauges, gas leak detectors, first alarm means for indicating a gas leak from the enclosure 4, second alarm means for indicating if a person is trapped in the enclosure 4, third alarm means for indicating the absence of a required vacuum in the enclosure 4, and fourth alarm means for indicating if there is a fault on the crushing machine 6. The control means 12 also includes appropriate safety devices and electrical supplies as appropriate.

The control means 12 is provided in a control room 32. The control room 32 is adjacent the enclosure 4 as shown. The enclosure 4 is provided with a glass viewing panel 34 so that an operator (not shown) in the control room 32 is able to see into the enclosure 4. The glass viewing panel 34 will be of an appropriate strength to withstand the vacuum pressure in the enclosure 4.

The enclosure 4 is preferably made from stainless steel. Other materials may however be employed. Any suitable and appropriate crushing machine 6 may be employed. The sliding door 8 is also made of stainless steel. It has a vacuum seal (not shown) so that, when the sliding door 8 is closed, the enclosure 4 is completely sealed.

The installation 2 also has a shredder (not shown) for shredding the products to make a larger surface area and to break up component materials of the products for recycling. The shredder is positioned in the enclosure 4 and it shreds the products before the crushing in the crushing machine 6. Shredding before crushing generally gives a larger useful surface area for recycling purposes than shredding after crushing. The shredder may be a mechanical shredder, for example a mechanical shredder with rotating blades or other shredding devices.

During operation of the installation 2, the crushing machine 6 operates to squeeze the products in the enclosure 4. The squeezed products release the majority of the gases that they contain, for example CFC/HCFC gases contained in air pockets of a refrigeration body in the case of refrigerators. Once the products have been sufficiently crushed, the crushing machine 6 remains closed until a gas sensor detect no more gases are present in the enclosure 4. When this happens, the reclaim means 10 shuts down so that no more gases are fed to the cylinders 22. The vacuum pump 14 reverses, thereby relieving the vacuum pressure that was previously in the enclosure 4, and returning the enclosure 4 to atmospheric pressure. The crushing machine 6 then releases its crushing pressure and air is allowed to enter the enclosure 4. This air can then get into voids in the crushed products. The air is preferably pre-filtered in order to avoid contamination of the crushed products with air that might already be contaminated with environment-damaging gases.

When the enclosure is initially provided with the products to be crushed and the enclosure is sealed, the vacuum pump 14 will be used to produce an appropriate vacuum (for example 1 inch) in order to avoid any cross-contamination between air in the enclosure 4 and reclaimed gas in the cylinders 22. When the cylinders 22 are full, they can be taken to an appropriate manufacturer for recycling.

The installation 2 is such that the various cylinders 22 can be filled with different gases. Thus, the cylinders 22 may be filled with gases known as R12, R22 and R502. These gases are three different types of refrigerant gas, with R502 being the refrigeration gas which is most effective in depleting ozone in the environment, with R12 having the next largest damaging effect.

It is to be appreciated that the embodiment of the invention described above with reference to the accompanying drawing has been given by way of example only and that modifications may be effected. Thus, for example, the enclosure 4 is made of stainless steel because it is able to withstand negative pressures of a 30 inch vacuum which may be required so as to ensure that none of the environment-damaging gases are released into the environment. Other materials which are able to withstand the vacuum pressures required may also be employed. Another type of door other than a sliding door may be employed for the enclosure 4. When the crushed product, for example a refrigerator, has been taken out of the enclosure 4, it may be split into its three components of metal, plastic and insulation (for example polyurethane) and sent for recycling. The polyurethane parts may be bonded together into sheets and used as a thermal insulate.

## Claims

1. An installation for recovering gases which damage the environment when released into the environment from products at the end of their working life, which installation comprises an enclosure which is sealable and which is for receiving the products, a shredder which is in the enclosure and which is for shredding the products to make a larger surface area and to break up component materials of the products for recycling, a crushing machine which is in the enclosure and which is for crushing the products, access means in the enclosure for permitting the products to be introduced into the enclosure and to be removed from the enclosure, reclaim means for reclaiming the gases which are released from the products into the enclosure, and control means for controlling operation of the installation.

2. An installation according to claim 1 and including filter means for filtering the gases that are reclaimed so that the reclaimed gases are available for re-use in a non-contaminated condition.

3. An installation according to claim 1 or claim 2 in which the reclaim means comprises a vacuum pump for pumping the gases from the enclosure into containers.

4. An installation according to any one of the preceding claims in which the control means includes vacuum gauges, pressure gauges, and gas leak detectors.

5. An installation according to claim 4 in which the control means also includes first alarm means for indicating a gas leak in the enclosure, second alarm means for indicating if a person is trapped in the enclosure, and third alarm means for indicating the absence of a required vacuum in the enclosure.

6. An installation according to claim 5 in which the control means includes fourth alarm means for indicating if there is a fault on the crushing machine.

7. An installation according to any one of the preceding claims and including safety devices.

8. An installation according to any one of the preceding claims in which the control means is provided in a control room which is adjacent the enclosure.

9. An installation according to claim 8 in which the control room and the enclosure are such that an operator in the control room is able to see into the enclosure.
